# EUROPÄISCHE PATENTANMELDUNG

(11) **EP 4 819 431 A1**
(43) Veröffentlichungstag der Anmeldung: **07.10.2026**
(21) Anmeldenummer: 26168958.2
(22) Anmeldetag: 30.03.2026
(51) Int. Cl.: H02J 3/38, H02J 3/388

(54) **DEZENTRALES STROMNETZ, WELCHES ÜBER EINEN LOKALEN ANSCHLUSS MIT EINEM ÖFFENTLICHEN VERTEILUNGSNETZ VERBINDBAR IST**

(30) Priorität: 01.04.2025 DE 102025112638
(71) Anmelder: Richter R&W - Steuerungstechnik GmbH, 95491 Ahorntal (DE)
(72) Erfinder: Zeilmann, Bernd, 95491 Ahorntal (DE)
(74) Vertreter: Rau, Schneck & Hübner Patentanwälte Rechtsanwälte PartGmbB

(57) **Zusammenfassung**

Dezentrales Stromnetz (1), welches über einen lokalen Anschluss (2) mit einem öffentlichen Verteilungsnetz (3) verbindbar ist, umfassend ein Wechselstromnetz (4), umfassend mindestens einen Leiter (L_{1WN}, L_{2WN}, L_{3WN}), einen Neutralleiter (NL_{WN}) und einen Schutzleiter (PE_{WN}), ein Gleichstromnetz (5), umfassend einen positiven Leiter (L_{pGN}), einen negativen Leiter (L_{nGN}) und einen Schutzleiter (PE_{GN}), eine Isolationsüberwachung (20, 26) und eine Sternschaltung (19), welche mit dem positiven Leiter (L_{pGN}), dem negativen Leiter (L_{nGN}) und dem Schutzleiter (PE_{GN}) verbunden ist, eine Verbindungseinrichtung (6), welche das Wechselstromnetz (4) und das Gleichstromnetz (5) miteinander verbindet, umfassend einen Wechselstrombereich (7), einen Gleichstrombereich (8) und mindestens einen bidirektionalen Converter (9), welcher den Wechselstrombereich (7) mit dem Gleichstrombereich (8) verbindet, eine Umschalt-/Trenneinrichtung (48) zum Trennen des dezentralen Stromnetzes (1) vom öffentlichen Verteilungsnetz (3) und zum Umschalten des dezentralen Stromnetzes (1) in den Inselbetrieb und eine Hauptpotentialausgleichseinrichtung (30), welche eine Erdungsanlage (31) aufweist und mit den Schutzleitern (PE_{WN}, PE_{GN}, PE_{WB}, PE_{LA}, PE_{ÜS}) des dezentralen Stromnetzes (1) verbunden ist.

## Beschreibung

Der Inhalt der deutschen Patentanmeldung DE 10 2025 112 638.0 wird durch Bezugnahme hierin aufgenommen.

Die Erfindung betrifft ein dezentrales Stromnetz, welches über einen lokalen Anschluss mit einem öffentlichen Verteilungsnetz verbindbar ist.

Durch die immer mehr zunehmende Verbreitung von Photovoltaik-Anlagen und Batteriespeichern in dezentralen Stromnetzen, wie beispielsweise Industriestandorten, kommunalen Anlagen, Privathaushalten oder Ähnlichem, wird es vermehrt notwendig, derartige dezentrale Stromnetze bei einer Stromüberproduktion in dem dezentralen Stromnetz, wie beispielsweise durch eine Photovoltaik-Anlage, vom öffentlichen Verteilungsnetz zu trennen, damit die Stromüberproduktion nicht zu einer Anhebung der Netzfrequenz des öffentlichen Verteilungsnetzes führt. Mit anderen Wort werden dezentrale Stromnetze vermehrt durch Ankoppeln und Abkoppeln sowie Nulleinspeisung vom öffentlichen Verteilungsnetz als Regelkraftwerke verwendet.

Die Problematik bei einer Abkopplung eines dezentralen Stromnetzes von dem öffentlichen Verteilungsnetz besteht insbesondere darin, dass eine vom öffentlichen Verteilungsnetz bereitgestellte und über den lokalen Anschluss an das dezentrale Stromnetz übergebene Sicherheitserdung durch die Abkopplung wegfällt. Bisherige Erdungskonzepte für abgekoppelte dezentrale Stromnetze sind nicht ausreichend, um ein dezentrales Stromnetz nach der Abkopplung vom öffentlichen Verteilungsnetz ausreichend bzw. ausreichend schnell abzusichern und eine Schutzmaßnahme gegen elektrischen Schlag bereitzustellen.

Die DE 10 2020 129 921 A1 offenbart ein Verfahren zum Symmetrieren von Spannungen in ein DC-Netz und eine Symmetriereinheit für ein DC-Netz. Die DE 10 2010 039 692 A1 offenbart ein Gerät zur Isolationsüberwachung eines nicht geerdeten Gleichspannungsnetzes und eine Anlage mit einem solchen Gerät.

Es ist Aufgabe der vorliegenden Erfindung ein dezentrales Stromnetz zu verbessern.

Die Aufgabe ist erfindungsgemäß gelöst durch ein dezentrales Stromnetz mit den im Anspruch 1 angegebenen Merkmalen.

Erfindungsgemäß wurde erkannt, dass ein dezentrales Stromnetz durch eine Sternschaltung im Gleichstromnetz in Kombination mit einer Hauptpotentialausgleichseinrichtung, welche eine Erdungsanlage aufweist und mit den Schutzleitern des dezentralen Stromnetzes verbunden ist, eine sichere und schnelle Erdung des dezentralen Stromnetzes, insbesondere eine vorschriftsgetreue Erdung mit Schutzmaßnahmen gegen elektrischen Schlag, ermöglicht. Durch die Sternschaltung kann im Gleichstromnetz eine Erdungsverbindung , zum Beispiel ein IT-Erdungs-System, erzeugt werden, welche bei Wegfall der Erdung, insbesondere an einem Trafosternpunkt, durch Abkoppeln des öffentlichen Verteilungsnetzes eine Erdungsfunktion übernehmen kann und ein geerdetes Stromnetz sicherstellen kann. Die Hauptpotentialausgleichseinrichtung, welche mit allen Schutzleitern des dezentralen Stromnetzes verbunden ist, stellt sicher, dass Bestandteile des dezentralen Stromnetztes und insbesondere alle berührbare leitende Teile des dezentralen Stromnetzes mit einer Erdungsanlage verbunden sind- und dasselbe Erdungspotential verwenden. Hierdurch kommt es insbesondere nicht zu möglicherweise problematischen Potentialunterschieden zwischen den einzelnen Komponenten des dezentralen Stromnetzes. Fehlerströme werden abgeleitet und Schutzeinrichtungen lösen sicher aus. Zudem sind die einzelnen Netze des dezentralen Stromnetzes einzeln anschaltbar, beispielsweise für Wartungszwecke, wobei sichergestellt ist, dass die noch im Betrieb befindlichen Netze ausreichend geerdet sind.

Die Erdungsanlage kann als Fundamenterder ausgebildet sein. Alternativ kann die Erdungsanlage als eine Kombination aus einem Fundamenterder,einem äußeren Ringerder oder auch über Tiefenerder ausgebildet sein. Generell kann die Erdungsanlage nach den gängigen Vorschriften zum Bereitstellen einer sicheren Erdung ausgebildet sein. Die Erdungsanlage ist besonders bevorzugt gemäß der Norm DIN 18014 ausgebildet.

Das Wechselstromnetz des dezentralen Stromnetzes weist mindestens einen, bevorzugt drei Leiter, einen Nullleiter oder Neutralleiter und einen Schutzleiter auf. Bevorzugt beträgt die Nennspannung jedes einzelnen Leiters gegenüber des Nullleiters 230 V und die Nennspannung des fünfadrigen Drehstromsystems Außenleiter gegen Außenleiter 400 V. Im Wechselstromnetz sind vorzugsweise Wechselstromverbraucher und/oder Wechselstromerzeuger vorgesehen. Beispielsweise kann im Wechselstromnetz eine Wärmepumpe oder eine CEE-Steckdose vorgesehen sein. Alternativ kann durch Anbindung an lediglich einen Leiter des Wechselstromnetzes eine 230 V-Steckdose, wie beispielsweise eine Schuko-Steckdose vorgesehen sein. Über die Einspeise-Steckdose, die insbesondere als Schuko-Steckdose oder CEE-Steckdose ausgeführt sein kann, oder einen bidirektionalen Ladeanschluss können beispielsweise Stromerzeuger oder Stromspeicher an dem Wechselstromnetz angebunden sein. Ein möglicher Stromerzeuger für das Wechselstromnetz wäre ein sogenanntes Balkonkraftwerk, welches auch unter dem Begriff "Steckersolargerät" bekannt ist. Ein weiterer möglicher Stromerzeuger für das Wechselstromnetz wäre ein Notstromgenerator. oder ein Elektrofahrzeug das über eine bidirektionale Ladeeinrichtung verbunden ist.

Das Gleichstromnetz umfasst einen positiven Leiter, einen negativen Leiter und einen Schutzleiter. Die Nennspannung des Gleichstromnetzes liegt bevorzugt im Bereich 500 V bis 900 V, insbesondere im Bereich 620 V bis 750 V. Ferner umfasst das Gleichstromnetz eine Isolationsüberwachung, über welche Erdschlüsse zwischen dem positiven Leiter oder dem negativen Leiter und dem Schutzleiter ermittelt werden können. Die Isolationsüberwachung kann bei Messung von Impedanzen oder der Detektion von Erdschlüssen einen Netzzustand feststellen und Gegenmaßnahmen einleiten.

Das Gleichstromnetz kann Gleichstrom-Verbraucher/-Erzeuger umfassen, wie beispielsweise eine Ladeeinrichtung, insbesondere eine Ladeeinrichtung für Elektroautos, eine Photovoltaik-Anlage und/oder einen Batteriespeicher. Der jeweilige Gleichstrom-Verbraucher/-Erzeuger kann über einen Gleichspannungswandler mit dem Gleichstromnetz verbunden sein. Ebenfalls kann ein Gleichstrom-Verbraucher/-Erzeuger direkt mit dem Gleichstromnetz verbunden sein, sofern die Nennspannung des Gleichstromnetzes der Nennspannung des Gleichstrom-Verbraucher/-Erzeugers entspricht.

Zwischen den Gleichstrom-Verbrauchern/-Erzeugern und dem Gleichstromnetz kann ebenfalls ein modularer, elektromechanischer Gleichstrom-Leistungsschalter vorgesehen sein. Der modulare, elektromechanische Gleichstrom-Leistungsschalter kann als Sicherung dienen. Der Aufbau eines derartigen Gleichstrom-Leistungsschalters ist beispielsweise in der Gebrauchsmusteranmeldung DE 20 2024 101 179.1 der Anmelderin beschrieben.

Über die Verbindungseinrichtung ist das Wechselstromnetz mit dem Gleichstromnetz verbunden. Hierfür weist die Verbindungseinrichtung einen Wechselstrombereich auf, welcher mit dem Wechselstromnetz verbunden ist und einen Gleichstrombereich, welcher mit dem Gleichstromnetz verbunden ist. Der Wechselstrombereich und der Gleichstrombereich der Verbindungseinrichtung sind über einen bidirektionalen Converter verbunden, welcher eine Wechselspannung in eine Gleichspannung und eine Gleichspannung in eine Wechselspannung umwandeln kann.

Der Verbindungsbereich, insbesondere der bidirektionale Converter, ermöglicht den Stromfluss zwischen dem Wechselstromnetz und dem Gleichstromnetz. Insbesondere wird hierdurch ermöglicht, dass Leistungserzeuger des Gleichstromnetzes Leistungsverbraucher des Wechselstromnetzes mit Energie versorgen können. Gleiches gilt für Leistungserzeuger des Wechselstromnetzes, welche beispielsweise Leistungsverbraucher des Gleichstromnetzes mit Strom versorgen können. Es können auch mehrere bidirektionale Converter parallelgeschaltet und die Stromflüsse zur schnellere Stromregelung und Netzstabilisierung entgegengerichtet werden

Die Umschalt-/Trenneinrichtung ermöglicht es, das dezentrale Stromnetz, insbesondere reversibel, vom öffentlichen Verteilungsnetz zu trennen und das dezentrale Stromnetz somit in einen Inselbetrieb umzuschalten. In einem Inselbetrieb arbeitet das dezentrale Stromnetz autark. Die Leistungserzeuger des Stromnetzes erzeugen insbesondere ausreichend elektrische Leistung, um die Verbraucher des dezentralen Stromnetzes zu betreiben.

Die Umschalt-/Trenneinrichtung ermöglicht es insbesondere, ein dezentrales Stromnetz, welches mehr Leistung erzeugt als es verbraucht, als Regelkraftwerk für das öffentliche Verteilungsnetz zu nutzen. Hierdurch kann sichergestellt werden, dass die Frequenz eines öffentlichen Verteilungsnetzes nicht über einen Grenzwert hinweg ansteigt und Verbraucher- oder Leistungserzeuger des öffentlichen Verteilungsnetzes durch den Frequenzanstieg beschädigen könnte.

Die Umschalt-/Trenneinrichtung kann einen Transformator aufweisen. Ein derartiger Transformator ist nicht zwingend.

Ein dezentrales Stromnetz gemäß Anspruch 2 stellt ein besonders sicheres, insbesondere regelkonformes, Erdungskonzept dar. Eine Trennkonfiguration kommt insbesondere dann zum Einsatz, wenn das dezentrale Stromnetz mit dem öffentlichen Verteilungsnetz gekoppelt ist. Im Gleichstromnetz liegt in einer derartigen Konfiguration ein sogenanntes TN-System vor. Eine Erdkonfiguration liegt insbesondere dann vor, wenn das dezentrale Stromnetz und das öffentliche Verteilungsnetz entkoppelt sind. Insbesondere liegt in der Erdkonfiguration ein sogenanntes IT-System vor. Über eine Schutzeinrichtung wird bei einem Erdschluss im Verteilstromkreis der Stromfluss innerhalb einer Zeitspanne < 5 s abgeschaltet. Dadurch wird der Schutz gegen elektrischen Schlag durch die Abschaltung der Stromversorgung entsprechen der Normen und allgemein anerkannten Regeln der Technik realisiert. Die Abschalt-Zeitspanne, die über die Sternschaltungs-Konfiguration bereitgestellt ist, ist kleiner als 5 s. Diese Abschalt-Zeitspanne kann kleiner sein als 4 s, kann kleiner sein als 3 s, kann kleiner sein als 2 s, kann kleiner sein als 1 s, kann kleiner sein als 0,5 s, kann kleiner sein als 0,2 s und kann auch noch kleiner sein. Regelmäßig ist diese Zeitspanne größer als 50 µs.

Ein dezentrales Stromnetz nach Anspruch 3 stellt eine bevorzugte Ausführungsform der Sternschaltung dar. Durch die schaltbare Ausgestaltung der Sternschaltung kann das Gleichstromnetz gezielt zwischen den Systemen TN-S, TN-C, TN-C-S und IT umgeschaltet werden.

In einem TN-S-System wird ein aktiver Leitungsleiter oder der aktive Mittelpunktleiter geerdet. Der Schutzleiter ist im gesamten System vom geerdeten aktiven Leiter getrennt. In einem TN-C-System sind der geerdete aktive Leiter und der Schutzleiter im gesamten System kombiniert. In einem TN-C-S-System sind der geerdete aktive Leiter und der Schutzleiter nur in einem Teil des Systems kombiniert. In einem IT-System sind alle aktiven Leiter von der Erde isoliert oder über eine ausreichend hohe Impedanz nur für Mess-oder Funktionszwecke mit der Erde verbunden. Die entsprechenden Netzformen sind in der IEC-Norm IEC 60364-4-41 geregelt.

Insbesondere ermöglicht es die schaltbare Ausgestaltung der Sternschaltung, das Gleichstromnetz während eines Netzfolgebetriebs in einem TN-Systems zu betrieben und bei einem Inselbetrieb in einem IT-Systems.

Ein dezentrales Stromnetz gemäß Anspruch 4 stellt bevorzugte Ausführungsformen der schaltbaren Ausgestaltung der Sternschaltung dar.

Eine mechanische Schaltbarkeit kann über mechanische Schalter ermöglicht werden, welche eine sichere Trennung der Leiter und des Schutzleiters ermöglichen. Alternativ kann ein elektronischer Schalter zum Einsatz kommen. Ein elektronischer Schalter lässt sich besonders schnell umschalten, wodurch eine schnelle Umschaltung der Netzform bei Entkopplung des dezentralen Stromnetzes und des öffentlichen Verteilungsnetzes möglich ist. Beispiele für elektronische Schalter sind beispielsweise Feldeffekttransistoren und Bipolartransistoren sowie Dioden. Es kann auch ein hybrides Schaltgerät, aufweisend eine Kombination aus mechanischen und elektronischen Schaltern, eingesetzt werden. Hierüber kann ein besonders schnelles und sicheres Schalten gewährleistet sein. Ein derartiges Schaltgerät kann insbesondere bei der Umschaltung der Erdungskonfiguration, insbesondere unter Nutzung von beispielsweise zusätzlicher Messtechnik, verwendet werden.

Eine schaltbare Ausgestaltung der Sternschaltung ermöglicht es ebenfalls die Sternschaltung in Abhängigkeit einer Isolationsüberwachung zu schalten. Beispielsweise kann ein bestimmter Leiter des Gleichstromnetzes dann auf einen Schutzleiter geschaltet werden, wenn die Isolationsüberwachung einen Fehlerstrom in diesem Leiter feststellt. Hierdurch kann dieser Leiter bei einem Erdschluss direkt auf den Schutzleiter geschalten werden, damit ein elektrischer Schlag an diesem Leiter vermieden werden kann. Ein entsprechendes Schalten kann durch gezieltes Schalten einzelner Schalter der Sternschaltung erfolgen.

Ein dezentrales Stromnetz nach Anspruch 5 zeigt eine bevorzugte Ausführung der Sternschaltung. Die Sternschaltung weist hierbei mindestens einen Widerstand, bevorzugt mindestens einen Widerstand je Zweig der Sternschaltung auf. Der Widerstand kann als fester Wiederstand ausgeführt sein.

Alternativ kann der Wiederstand als veränderbarer Widerstand ausgeführt sein. Bei dem Einsatz von mehreren Widerständen können die Widerstände gleich oder unterschiedlich ausgeführt sein.

Durch die veränderliche Sternschaltung von Widerständen zwischen positiven Leiter, negativen Leiter und einen Schutzleiter kann die Impedanz gesteuert werden. Durch das Einstellen einer ausreichend hohen Impedanz der Sternschaltung kann erzielt werden, dass ein Stromfluss im Normalbetrieb des Stromnetzes nicht erfolgt, sondern lediglich dann, wenn ein Erdschluss auf einem der Leiter vorliegt. Durch den Widerstand wird demnach sichergestellt, dass eine dauerhafte Verbindung der Leiter mit der Erde über den Schutzleiter möglich ist. Somit bleibt auch bei einer Trennung von geerdetem öffentlichen Verteilnetz eine Erdverbindung bestehen.

Ein dezentrales Stromnetz gemäß Anspruch 6 stellt eine bevorzugte Entkopplungsmöglichkeit zwischen dem öffentlichen Verteilungsnetz und dem dezentralen Stromnetz dar. Es hat sich gezeigt, dass ein Kupplungsschalter leicht ferngesteuert geschaltet werden kann und eine Entkopplung verlässlich durchführt.

Der erste Kuppelschalter ist bevorzugt in der Verbindungseinrichtung, insbesondere im Wechselstrombereich der Verbindungseinrichtung angeordnet. Besonders bevorzugt ist der erste Kuppelschalter zwischen dem lokalen Anschluss und einer Verbindungsstelle der Verbindungseinrichtung mit dem Wechselstromnetz angeordnet.

Ein dezentrales Stromnetz gemäß Anspruch 7 schützt das dezentrale Stromnetz, insbesondere dessen Leistungsverbraucher und Leistungserzeuger vor Überspannung, beispielsweise durch einen Blitzschlag. Der Überspannungsschutz kann vorzugsweise über einen Schutzleiter mit der Hauptpotentialausgleichseinrichtung verbunden sein. Ebenso kann dadurch ein Blackout-Schutz bei Manipulation am Verteilnetz realisiert werden.

Ein dezentrales Stromnetz gemäß Anspruch 8 ermöglicht die Trennung des Wechselstromnetzes und des Gleichstromnetzes. Durch eine Trennung kann beispielsweise sichergestellt werden, dass bei Fehlern in einem der beiden Netze das jeweils andere Netz weiter betrieben werden kann. Sofern beispielsweise ein Fehler im Gleichstromnetz auftritt, kann dieses durch den zweiten Kuppelschalter vom dezentralen Stromnetz getrennt und abgeschaltet werden. Bei einem Netzfolgebetrieb kann dann das Wechselstromnetz weiter durch das öffentliche Verteilungsnetz betrieben werden.

Alternativ kann bei einem Fehler im Wechselstromnetz das Gleichstromnetz durch Öffnen des zweiten Kuppelschalters weiter unabhängig betrieben werden. Hierbei kann beispielsweise ein im Gleichstromnetz angeordneter Energiespeicher weiterhin über die im Gleichstromnetz angeordnete Photovoltaik-Anlage geladen werden. Das Gleichstromnetz kann insbesondere autark betrieben werden. Bei Manipulation können Teilnetze vom Gesamtnetz isoliert werden und die Versorgung aufrechthalten.

Der zweite Kuppelschalter ist bevorzugt im Wechselstrombereich der Verbindungseinrichtung, insbesondere zwischen dem bidirektionalen Converter und dem Verbindungsbereich zwischen dem Wechselstromnetz und dem Wechselstrombereich der Verbindungseinrichtung angeordnet.

Ein dezentrales Stromnetz gemäß Anspruch 9 ermöglicht es, einen Stromfluss zwischen dem Wechselstromnetz und der Verbindungseinrichtung zu ermöglichen, wobei das Wechselstromnetz und die Verbindungseinrichtung galvanisch getrennt sind.

Ein Transformator ist insbesondere dann vorteilhaft, wenn der zweite Transformatorteil, welcher mit der Verbindungseinrichtung in Verbindung steht, durch den zweiten Kuppelschalter vom Wechselstromnetz abgetrennt werden kann. Durch eine Kombination des zweiten Kuppelschalters und des Transformators kann die Verbindung zwischen dem Wechselstromnetz und dem Gleichstromnetz von einer Verbindung ohne galvanische Trennung auf eine Verbindung mit galvanischer Trennung und umgekehrt umgestellt werden.

Eine Verbindung zwischen dem Wechselstromnetz und dem Gleichstromnetz mit galvanischer Trennung ermöglicht es beispielsweise die beiden Stromnetze mit unterschiedlichen Netzformen und Erdungskonzepten zu betreiben. Zudem sind die beiden Netze unabhängig voneinander betreibbar.

Ein dezentrales Stromnetz gemäß Anspruch 10 ermöglicht es, die beiden mit den Transformatorteilen verbundenen Netze sicher zu erden. Eine derartige Erdung durch den Transformator ist insbesondere dann vorteilhaft, wenn eine Erdung durch das öffentliche Verteilungsnetz wegfällt, insbesondere bei Entkopplung des dezentralen Stromnetzes von dem öffentlichen Verteilungsnetz.

Ein dezentrales Stromnetz gemäß Anspruch 11 ermöglicht es, den Transformator nur in gewünschten Situationen, beispielsweise bei einem geöffneten zweiten Kuppelschalter, zu betreiben.

Ein dezentrales Stromnetz gemäß Anspruch 12 ermöglicht es, das dezentrale Stromnetz auf einen Fehlerfall oder auf Überproduktion zu überwachen. Der Netz- und Anlagenschutz kann beispielsweise aktuelle Messwerte anzeigen.

Ein dezentrales Stromnetz gemäß Anspruch 13 ermöglicht es, das dezentrale Stromnetz bei einer Stromüberproduktion automatisch oder ferngesteuert durch Ansteuerung des ersten Kuppelschalters durch den Netz- und Anlagenschutz abzukoppeln. Durch Ansteuerung des zweiten Kuppelschalters, des der ersten Trennvorrichtung sowie der zweiten Trennvorrichtung und durch Schalten der Sternschaltung ermöglicht es dem Netz- und Anlagenschutz das Wechselstromnetz und das Gleichstromnetz automatisch galvanisch zu trennen. Es wird eine Erdung für das Wechselstromnetz, welches im TN-System geerdet ist, bereitgestellt. Ferner wird durch das Schalten der Sternschaltung eine Erdung im Gleichstromnetz, insbesondere ein IT-System, bereitzustellen.

Der Netz- und Anlagenschutz kann nach VDE-AR-N 4105 oder VDE AR-N 4110 den Zustand des öffentlichen Verteilnetzes, wie Spannung, Frequenz und/oder Phasenverschiebungswinkel, die Einspeisung von Energie vom dezentralen Stromnetz, insbesondere den Strom und/oder die Wirkleitung, in das öffentliche Verteilungsnetz kontrollieren, das öffentliche Verteilungsnetz schützen, wenn keine Energie eingespeist werden darf, die Leistungserzeugungsanlage schützen, wenn das öffentliche Verteilungsnetz nicht den vorgegebenen Werten entspricht und das öffentliche Verteilungsnetz stabilisieren und stützen, wenn kurze Lastspitzen oder Verschiebungen von Wirkleistung zur Scheinleistung auftreten.

Ein dezentrales Stromnetz gemäß Anspruch 14 ermöglicht im Netzfolgebetrieb die Übertragung der durch das öffentliche Verteilungsnetz bereitgestellten Erde von dem Wechselstrombereich der Verbindungseinrichtung an den Gleichstrombereich und somit an das Gleichstromnetz. Der bidirektionale Converter ist hierfür vorzugsweise mit dem Schutzleiter und/oder Nullleiter des Wechselstrombereichs verbunden.

Ein dezentrales Stromnetz gemäß Anspruch 15 ermöglicht die Detektion von Erdschlüssen im Wechselstromnetz. Über die Differenzstromüberwachung können insbesondere Erdschlüsse lokalisiert und eliminiert werden ohne den sicheren Betrieb des Gesamtnetzes zu gefährden. Bei der Detektion von Erdschlüssen im Wechselstromnetz anhand der Differenzstromüberwachung können dann beispielsweise entsprechende Wechselstromerzeuger oder Wechselstromverbraucher von dem Wechselstromnetz getrennt werden. Hierfür können im Wechselstromnetz Trennschalter zum Trennen von Wechselstromerzeuger/-verbrauchern vom Wechselstromnetz vorgesehen sein. Die Trennschalter können insbesondere in Abhängigkeit einer Differenzstromüberwachung schaltbar ausgeführt sein. Die Schaltung der Trennschalter kann insbesondere automatisiert erfolgen.

Alternativ kann das Wechselstromnetz abgeschaltet werden. Alternativ kann ein Wartungspersonal alarmiert werden.

Ein Ausführungsbeispiel des Erfindungsgegenstandes ist in den Figuren gezeigt. Es zeigen:
- Fig. 1: ein Schaltbild eines erfindungsgemäßen dezentralen Stromnetzes,
- Fig. 2: eine vergrößerte Darstellung des Bereichs A der Fig. 1,
- Fig. 3: eine vergrößerte Darstellung des Bereichs B der Fig. 1,
- Fig. 4: eine vergrößerte Darstellung des Bereichs C der Fig. 1,
- Fig. 5: eine vergrößerte Darstellung des Bereichs D der Fig. 1, und
- Fig. 6: eine alternative Ausführung für den Bereich B der Fig. 1 mit alternativer Umschalt-/Trenneinrichtung.

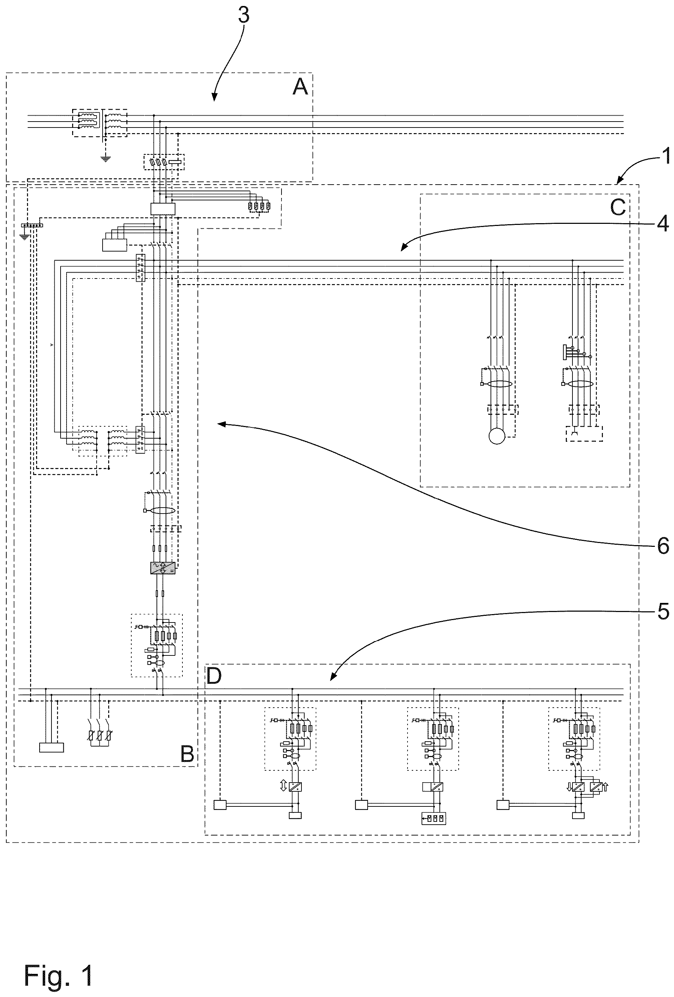

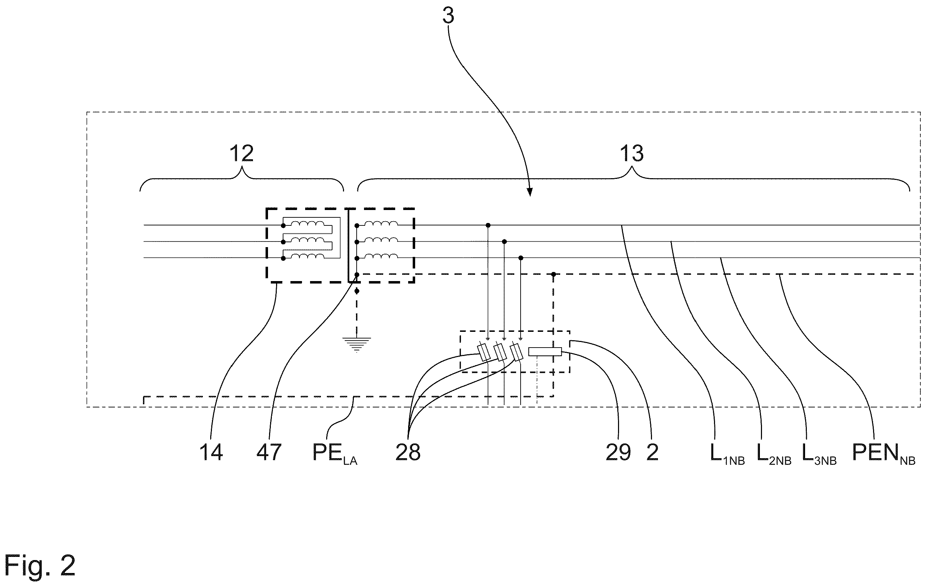

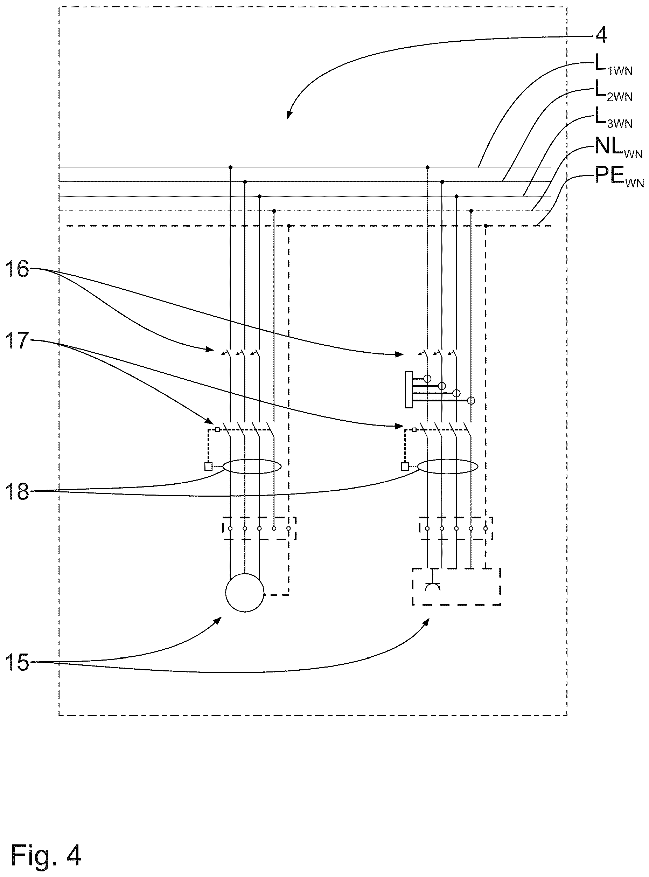

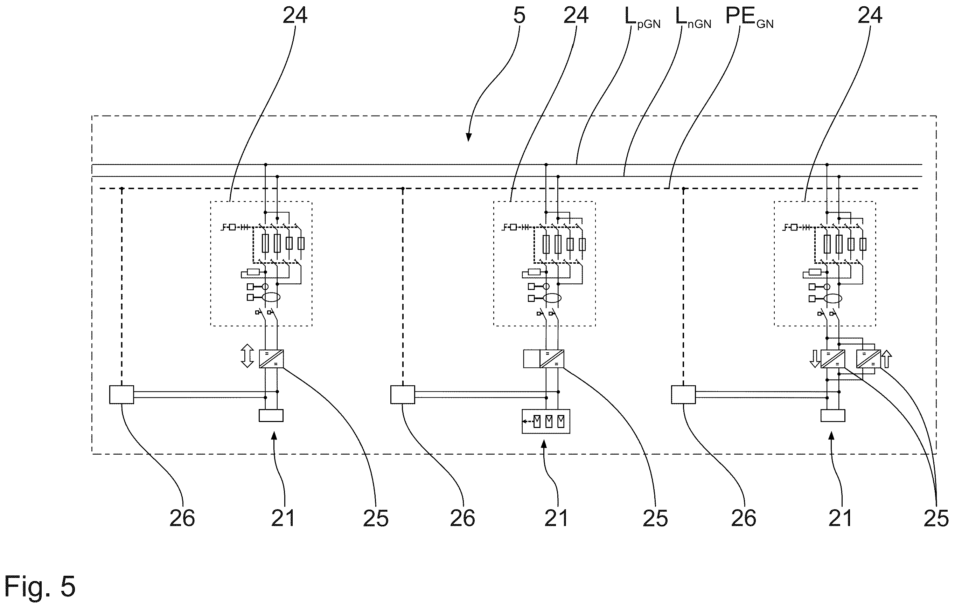

In Fig. 1, in welcher aus Übersichtsgründen nur die Netze mit Bezugszeichen versehen sind, ist ein Schaltplan eines dezentralen Stromnetzes 1 gezeigt, welches über einen lokalen Anschluss 2 mit einem öffentlichen Verteilungsnetz 3 verbindbar ist. Die Teilbereiche A, B, C und D des in Fig. 1 gezeigten Schaltplans sind in den Fig. 2 bis 5 in vergrößerter Form dargestellt.

Das dezentrale Stromnetz 1 weist ein Wechselstromnetz 4, ein Gleichstromnetz 5 und eine Verbindungseinrichtung 6 auf. Die Verbindungseinrichtung 6 weist einen Wechselstrombereich 7 und einen Gleichstrombereich 8 auf, welche über einen bidirektionalen Converter 9 miteinander verbunden sind. Der bidirektionale Converter 9 ist derart ausgestaltet, dass dieser keine galvanische Trennung aufweist.

Die Verbindungseinrichtung 6 ist an einer ersten Verbindungsstelle 10 stromleitend mit dem Wechselstromnetz 4 und an einer zweiten Verbindungsstelle 11 stromleitend mit dem Gleichstromnetz 5 verbunden.

Das öffentliche Verteilungsnetz 3 weist einen Mittelspannungsbereich 12 und einen Niederspannungsbereich 13 auf. Der Mittelspannungsbereich 12 weist eine Nennspannung von 20 kV auf, der Niederspannungsbereich 13 weist eine Nennspannung von 0,4 kV auf. Der Mittelspannungsbereich 12 und der Niederspannungsbereich 13 sind über einen Transformator 14 verbunden. Auf der Seite des Niederspannungsbereichs 13 ist der Transformator 14 über eine Sternpunkterdung 47 geerdet. Der Niederspannungsbereich 13 des öffentlichen Verteilungsnetzes 3 ist vieradrig ausgeführt, mit einem ersten Leiter L_{1NB}, einem zweiten Leiter L_{2NB}, einem dritten Leiter L_{3NB} und einem kombinierten Null- und Schutzleiter PEN_{NB}. In den Figuren sind Schutzleiter und kombinierte Null- und Schutzleiter als gestrichelte Linie dargestellt. Nullleiter sind in den Figuren als Punkt-Strich-Linie dargestellt.

Das Wechselstromnetz 4 des dezentralen Stromnetzes 1 ist fünfadrig ausgeführt und weist einen ersten Leiter L_{1WN}, einen zweiten Leiter L_{2WN}, einen dritten Leiter L_{3WN}, einen Nullleiter NL_{WN} und einen Schutzleiter PE_{WN} auf. Das Wechselstromnetz 4 weist eine Wechselstrom-Nennspannung von 400 V auf. Jeder einzelne Leiter L_{1WN}, L_{2WN}, L_{3WN} weist eine Nennspannung von 230 V gegenüber dem Nullleiter NL_{WN} auf. Im Wechselstromnetz 4 sind Wechselstromverbraucher 15 angeordnet, bei welchen es sich beispielsweise um eine Wärmepumpe, einen Notstromgenerator oder eine CEE-Steckdose handeln kann. Ferner können im Wechselstromnetz 4 230 V Steckdosen, insbesondere sogenannte Schuko-Steckdosen, angeordnet sein, welche dann nur mit einem Leiter I_{1WN}, L_{2WN} oder L_{3WN} verbunden sind. Zwischen dem Wechselstromnetz 4 und dem Wechselstrom-Verbraucher 15 sind jeweils eine Sicherung 16, eine Schalteranordnung 17 und eine Differenzstromüberwachung 18 angeordnet. Die Schalteranordnung 17 kann insbesondere in Abhängigkeit der Differenzstromüberwachung 18, insbesondere automatisch, geschaltet werden.

Das Gleichstromnetz 5 weist einen positiven Leiter L_{pGN}, einen negativen Leiter L_{nGN} und einen Schutzleiter PE_{GN} auf. Das Gleichstromnetz 5 weist ferner eine Sternschaltung 19, eine Isolationsüberwachung 20 sowie Gleichstrom-Verbraucher/-Erzeuger 21 auf. Bei den Gleichstrom-Verbrauchern/-Erzeugern 21 kann es sich um eine Ladeeinrichtung, eine Photovoltaik-Anlage oder einen Batteriespeicher handeln. Die Nennspannung des Gleichstromnetzes 5 liegt im Bereich 620 V bis 750 V.

Die Sternschaltung 19 ist jeweils über einen Schalter 22 und einen Widerstand 23 mit dem positiven Leiter L_{pGN}, dem negativen Leiter L_{nGN} und dem Schutzleiter PE_{GN} des Gleichstromnetzes 5 verbunden. Der Widerstand 23 kann als fester oder veränderbarer Widerstand ausgebildet sein. Die einzelnen Widerstände 23 der Sternschaltung 19 können gleich oder unterschiedlich ausgebildet sein.

Je nach Schalterstellung der Schalter 22 kann das Gleichstromnetz 5 über die Sternschaltung 19 auf eines der Systeme TN-S, TN-C, TN-C-S oder IT umgestellt werden. Die verschiedenen Netzformen sind beispielsweise in der IEC-Norm IEC-60364-4-41 genauer definiert.

Die Gleichstrom-Verbraucher/-Erzeuger 21 sind über einen modularen elektromagnetischen Gleichstrom-Leistungsschalter 24 und mindestens einen Gleichspannungswandler 25 verbunden. Der Gleichspannungswandler 25 weist eine galvanische Trennung auf. Der Gleichspannungswandler 25 kann bidirektional oder monodirektional ausgeführt sein. Ferner können mehrere parallel geschaltete Gleichspannungswandler 25 verwendet werden, beispielsweise wenn es sich bei dem Gleichstrom-Verbraucher/Erzeuger 21 um einen Batteriespeicher handelt, bei welchem ein Gleichspannungswandler 25 für den Ladevorgang und ein anderer Gleichspannungswandler 25 für den Entladevorgang verwendet werden kann. Der Aufbau eines derartigen Gleichstrom-Leistungsschalters 24 ist beispielsweise in der Gebrauchsmusteranmeldung DE 20 2024 101 179.1 der Anmelderin beschrieben.

Zwischen dem Gleichstrom-Verbraucher/-Erzeuger 21 und dem Gleichspannungswandler 25 ist ebenfalls eine Isolationsüberwachung 26 vorgesehen, welche jeweils mit dem Schutzleiter PE_{GN} des Gleichstromnetzes 5 verbunden ist.

Der Wechselstrombereich 7 der Verbindungseinrichtung 6 ist wie das Wechselstromnetz 4 fünfadrig ausgeführt und weist einen ersten Leiter L_{1WB}, einen zweiten Leiter L_{2W}, einen dritten Leiter L_{3WB}, einen Nullleiter NL_{WB} und einen Schutzleiter PE_{WB} auf. Der Gleichstrombereich 8 der Verbindungseinrichtung 6 weist einen positiven Leiter L_{pGB} und einen negativen Leiter L_{nGB} auf. Über den bidirektionalen Converter 9 sind der erste Leiter L_{1WB}, der zweite Leiter L_{2WB} und der dritter Leiter L_{3WB} mit dem positiven Leiter L_{pGB} und dem negativen Leiter L_{nGB} ohne galvanische Trennung verbunden.

Im Gleichstrombereich 8 sind zwischen dem bidirektionalen Converter 9 und dem Gleichstromnetz 5 Widerstände 27 sowie ein modularer elektromagnetischer Gleichstrom-Leistungsschalter 24 vorgesehen.

Der bidirektionale Converter 9 kann als Active Infeed Converter (AIC), also als aktive Einspeisung, ausgeführt sein. Der bidirektionale Converter 9 kann eine netzbildenede Stromquelle sowohl im Gleichstromnetz 5 als auch im Wechselstromnetz 4 darstellen. Je Stromrichtung kann mindestens ein eigener AIC erforderlich sein.

Der bidirektionale Converter 9 kann beispielsweise vier AIC-Einheiten aufweisen. Je nach den Anforderungen an die Stromversorgung über das dezentrale Stromnetz 1 können dann zwei dieser vier AIC-Einheiten ein Rückspeisen vom Gleichstromnetz 5 in das Wechselstromnetz 4 bewerkstelligen und die beiden anderen AIC-Einheiten können gleichzeitig ein Einspeisen vom Wechselstromnetz 4 in das Gleichstromnetz 5 bewerkstelligen. Wenn die beiden in das Gleichstromnetz 4 rückspeisenden AIC-Einheiten zusammen betrachtet werden, ist hierüber also ein Rückspeisemodus 25/50/25 möglich.

Bei getrenntem Wechselstromnetz 4 kann auch der bidirektionale Converter 9 vom Gleichstromnetz 5 getrennt werden und ein Inselbetrieb des Gleichstromnetzes 5 kann dann erfolgen, bei denen die lokalen DC-Stromquellen Verbraucher des Gleichstromnetzes 5 versorgen.

Der Wechselstrombereich 8 der Verbindungseinrichtung 6 ist über den lokalen Anschluss 2 mit dem Niederspannungsbereich 13 des öffentlichen Verteilungsnetzes 3 verbunden. Bei dem lokalen Anschluss 2 kann es sich beispielsweise um einen Haus-, Fabrik- oder Gebäudeanschluss handeln. Der lokale Anschluss 2 umfasst eine Schalteranordnung 28 und eine PEN-Schiene 29. Über die Schalteranordnung 28 kann das dezentrale Stromnetz 1 von dem öffentlichen Verteilungsnetz 3 getrennt werden. Die PEN-Schiene 29 teilt den kombinierten Null- und Schutzleiter PEN_{NB} des Niederspannungsbereichs 13 des öffentlichen Verteilungsnetzes 3 in den Nullleiter NL_{WB} des Wechselstrombereichs sowie einen Schutzleiter PE_{LA} des lokalen Anschlusses 2 auf.

Der Schutzleiter PE_{LA} des lokalen Anschlusses 2 ist mit einer Hauptpotentialausgleichseinrichtung 30 verbunden, welche vorzugsweise als Hauptpotentialausgleichsschiene ausgeführt ist. Die Hauptpotentialausgleichseinrichtung 30 ist direkt oder indirekt mit dem Schutzleiter PE_{WB} des Wechselstrombereichs 7, dem Schutzleiter PE_{WN} des Wechselstromnetzes 4 und dem Schutzleiter PE_{GN} des Gleichstromnetzes 5 verbunden. Über die Hauptpotentialausgleichseinrichtung 30 wird sichergestellt, dass sämtliche Schutzleiter des dezentralen Stromnetzes 1 das gleiche Erdungs-Niveau aufweisen. Über die Hauptpotentialausgleichseinrichtung 30 wird die Verbindung zu einer als Fundamenterder 31 ausgeführten Erdungsanlage, über welchen die niederohmige Erdungsverbindung für die Schutzleiter hergestellt wird. Die Erdungsanlage kann zusätzlich zu dem Fundamenterder 31 einen nicht gezeigten äußeren Ringerder aufweisen. Die Erdungsanlage ist besonders bevorzugt gemäß der Norm DIN 18014 ausgebildet.

Zwischen dem lokalen Anschluss 2 und der ersten Verbindungsstelle 10 des Wechselstrombereichs 7 der Verbindungseinrichtung 6 ist ein Überspannungsschutz 32 und ein Netz- und Anlagenschutz 33 sowie ein erster Kuppelschalter 34 angeordnet. Der Überspannungsschutz 32 ist ebenfalls über einen Schutzleiter PE_{ÜS} mit der Hauptpotentialausgleichseinrichtung 30 verbunden. Über den Überspannungsschutz 32 kann das dezentrale Stromnetz 1 vor Überspannung, beispielsweise durch einen Blitzschlag, geschützt werden.

Zwischen der ersten Verbindungsstelle 10 und den bidirektionalen Convertern 9 weist der Gleichstrombereich 7 der Verbindungseinrichtung 6 ferner einen zweiten Kuppelschalter 35, Sicherungen 36, eine Schalteranordnung 37, eine Differenzstromüberwachung 38, eine Stromüberwachung 38a und Widerstände 39 auf. Zwischen dem zweiten Kuppelschalter 35 und der Sicherung 36 ist die Verbindungseinrichtung 6 über einen dritten Verbindungsbereich 40 mit einem Transformator 41 verbunden. Bei dem Transformator 41 handelt es sich insbesondere um einen Spulentransformator mit galvanischer Trennung.

Der Transformator 41 weist einen ersten Transformatorteil 42 auf, welcher über eine erste Trennvorrichtung 43 mit dem Wechselstromnetz 4 verbunden ist. Ferner weist der Transformator 41 einen zweiten Transformatorteil 44 auf, welcher über eine zweite Trennvorrichtung 45 mit der Verbindungseinrichtung 6 im dritten Verbindungsbereich 40 verbunden ist. Der erste Transformatorteil 42 und der zweite Transformatorteil 44 sind jeweils über eine Sternpunkterdung 46 geerdet. Die Sternpunkterdungen 46 sind jeweils ebenfalls mit der Hauptpotentialausgleichseinrichtung 30 verbunden.

Zwischen den beiden Transformatorenteilen 42 und 44 verläuft eine Grenze zwischen dem Wechselstromnetz 4 und dem Gleichstromnetz 5.

Der erste Kupplungsschalter 34, der zweite Kupplungsschalter 35 sowie die erste Trennvorrichtung 43 und die zweite Trennvorrichtung 45 bilden eine Umschalt-/Trenneinrichtung 48 aus. Über die Umschalt-/Trenneinrichtung 48 lässt sich das dezentrale Stromnetz 1 von einem Netzfolgebetrieb in einen Inselbetrieb und umgekehrt umschalten. Der erste Kupplungsschalter 34, der zweite Kupplungsschalter 35 sowie die erste Trennvorrichtung 43 und die zweite Trennvorrichtung 45 stehen über eine Verbindungsstrecke 49 mit dem Netz- und Anlagenschutz 33 in Signalverbindung.

In einem Netzfolgebetrieb wird durch die Sternpunkterdung 47 (vgl. Fig. 2) des Transformators 14 über die Hauptpotentialausgleichseinrichtung 30 des öffentlichen Verteilungsnetzes 3 eine Erdung über den kombinierten Null- und Schutzleiter PEN_{NB} erzielt. Dieser kombinierte Null- und Schutzleiter PEN_{NB} wird jedem lokalen Anschluss 2 zur Verfügung gestellt.

Herkömmlich werden sowohl das Wechselstromnetz 4 als auch das Gleichstromnetz 5 über die vom öffentlichen Verteilungsnetz 3 bereitgestellte Erde als TN-System geerdet. Durch die zunehmende Verbreitung von Photovoltaik-Anlagen sowie Batteriespeichern als auch bidirektionale Ladeeinrichtungen, welche in das öffentliche Verteilungsnetz 3 einspeisen können, stellt sich immer mehr die Herausforderung, das öffentliche Verteilungsnetz 3 zu regeln. Hierfür wird ein Netz- und Anlagenschutz 33 vorgesehen, über welchen das dezentrale Stromnetz 1 durch Öffnen des ersten Kuppelschalters 34 vom öffentlichen Verteilungsnetz 3 getrennt werden kann. Diese sichere Trennung ist auch für Wartungs- und Instandhaltungsarbeiten am Stromnetz wichtig. Dabei ein Stromnetz abgeschaltet werden ohne die verbundenen Netze abzuschalten. Bei klassischen dezentralen Stromnetzen 1 fällt bei der Trennung vom öffentlichen Verteilungsnetz 3 ebenfalls die bereitgestellte Erde weg. Durch den Wegfall der Erde ist das dezentrale Stromnetz 1 nicht mehr vorschriftsgemäß geerdet.

Um eine Erdung des dezentralen Stromnetzes 1 im Inselbetrieb zu gewährleiten, wird die Sternschaltung 19 sowie der Transformator 41 mit Sternpunkterdungen 46 vorgesehen. Bei einer Umschaltung des dezentralen Stromnetzes 1 auf den Inselbetrieb können die Schalter 22 der Sternschaltung 19, bevorzugt automatisch durch den Netz- und Anlagenschutz 33, geschlossen werden. Durch das Schließen der Schalter 22 werden der positive Leiter L_{pGN} und der negative Leiter L_{nGN} über die Impedanz der Widerstände 23 auf den Schutzleiter PE_{GN} geschaltet. Das Gleichstromnetz 5 wird hierbei von einem TN-System in ein IT-System umgeschaltet. Das IT-System und die Widerstände 23 stellen sicher, dass ein Fehlerstrom bei einem Erdschluss innerhalb einer Zeitspanne < 5 s. fließen kann, wodurch das Gleichstromnetz 5 vorschriftsgemäße Schutzmaßnahmen gegen elektrischen Schlag aufweist.

Bei einer Umschaltung von einem Netzfolgebetrieb in einen Inselbetrieb wird neben dem ersten Kupplungsschalter 34 ebenfalls der zweite Kupplungsschalter 35 geöffnet und die Trennvorrichtungen 43, 45 geschlossen. Anstelle einer direkten Kabelverbindung zwischen dem Gleichstromnetz 5 und dem Wechselstromnetz 4 erfolgt die Verbindung im Inselbetrieb über den Transformator 41. Der Transformator 41 ermöglicht eine galvanische Trennung des Gleichstromnetzes 5 und des Wechselstromnetzes 4 und stellt gleichzeitig durch die Sternpunkterdung 46 im Transformator 41 eine neue Erdung des Wechselstromnetzes 4 sowie des Wechselstrombereichs 7 der Verbindungseinrichtung 6 bereit.

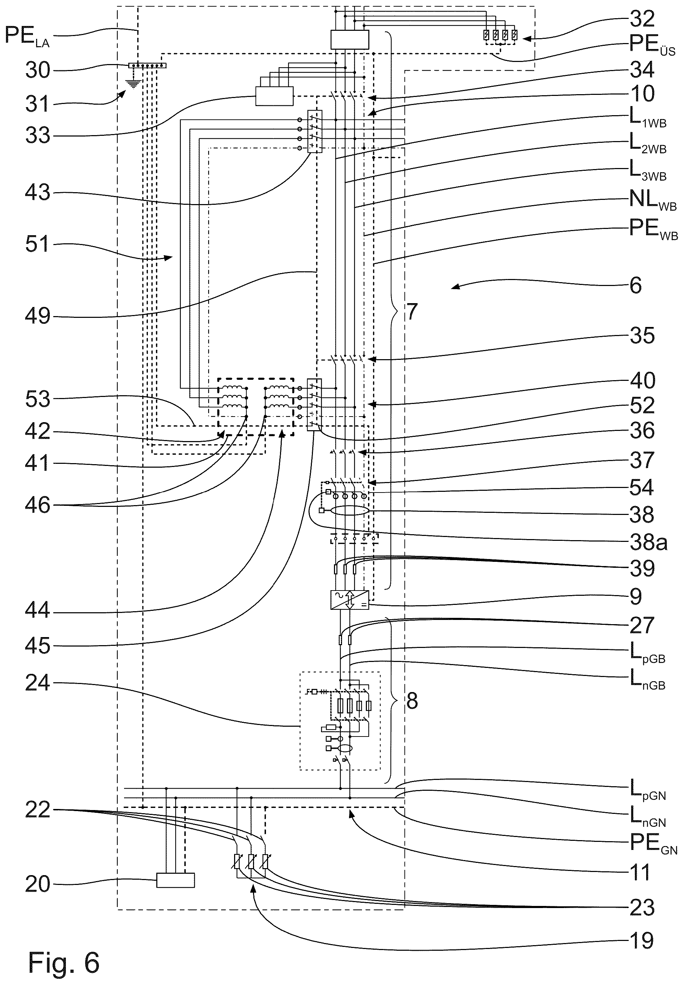

Um einen Schutz vor elektrischem Schlag im Wechselstromnetz 4 und im Gleichstromnetz 5 zu gewährleisten, weist das Wechselstromnetz 4, welches insbesondere über ein TN-System geerdet ist, eine Differenzstrommessung in Form der Differenzstromüberwachung 18 auf. Das Gleichstromnetz 5 weist wiederum eine Differenzstromüberwachung 38 sowie eine Stromüberwachung 38a (vgl. insbesondere Fig. 6) auf. Über diese Differenzstromüberwachungen und/oder über die Stromüberwachung kann erfasst werden, ob beispielsweise ein Erdschluss bei einem der beiden Leiter vorliegt. Bei Erfassen eines Erdschlusses können beispielsweise betroffene Wechselstromverbraucher 15 über die Schalteranordnungen 17, insbesondere automatisch, vom Wechselstromnetz 4 getrennt werden. Alternativ kann ein Wartungspersonal alarmiert werden.

Im Gleichstromnetz 5 wird der Schutz gegen elektrischen Schlag im Inselbetrieb, insbesondere wenn das Gleichstromnetz 5 über ein IT-System geerdet ist, durch die Isolationsüberwachungen 20, 26 realisiert. Diese Isolationsüberwachungen 20, 26 können Erdschlüsse zwischen dem positiven Leiter L_{pGN} oderdem negativen Leiter L_{nGN} mit dem Schutzleiter PE_{GN} feststellen. Erdschlüsse können beispielsweise einem Wartungspersonal gemeldet oder durch eine automatische Abschaltung beseitigt werden.

Bei einem Umschalten von dem Inselbetrieb in den Netzfolgebetrieb werden die Trennvorrichtung 43, 45 geöffnet und die Kuppelschalter 34, 35 geschlossen. Das Gleichstromnetz 5 kann dann erneut auf ein TN-System durch Öffnen der Schalter 22 der Sternschaltung 19 umgeschaltet werden. Eine Erdung des Wechselstromnetzes 4 und des Gleichstromnetzes 5 erfolgt im Netzfolgebetrieb dann durch den bidirektionalen Converter 9 ohne galvanische Trennung.

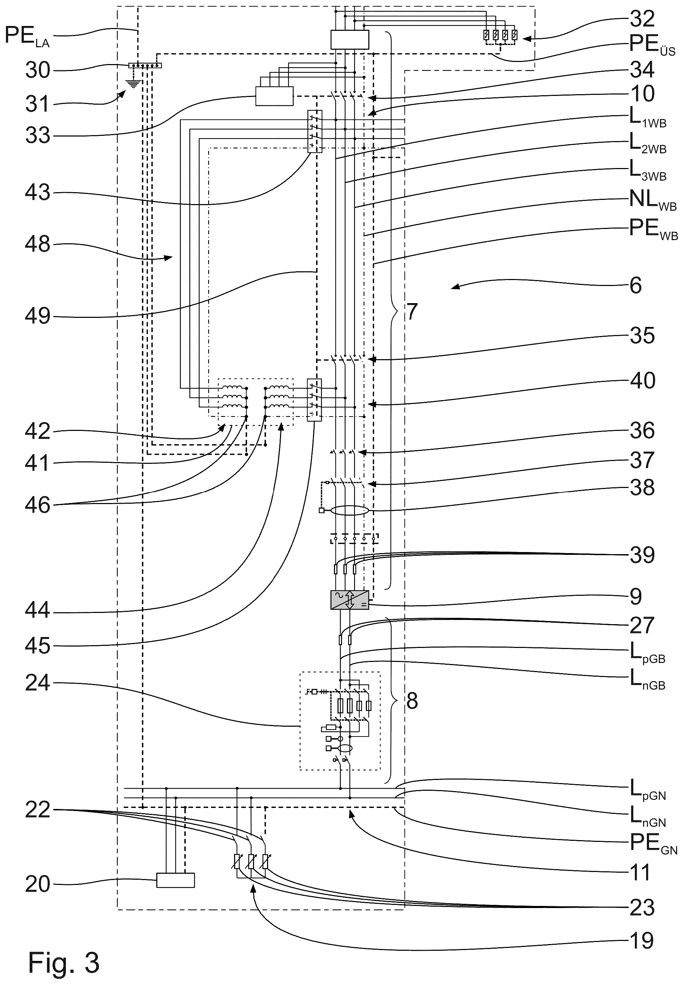

Fig. 6 zeigt eine zur Fig. 3 alternativ gestaltete Umschalt-Trenneinrichtung 51, die anstelle der Umschalt-/Trenneinrichtung 48 beim dezentralen Stromnetz 1 zum Einsatz kommen kann. Bei der Umschalt-/Trenneinrichtung 51 wird mit der zweiten Trennvorrichtung 45 der Nullleiter NL_{WB} schaltbar mit der Hauptpotentialausgleichsschiene 30 verbunden. Dies geschieht über ein zusätzliches Schaltelement 52 der zweiten Trennvorrichtung, die einerseits über eine Erdungsleitung 53 mit der Hauptpotentialausgleichseinrichtung 30 und andererseits über einen Leitungsabschnitt 54 mit dem Nullleiter NL_{WB} verbunden ist. Hierüber ist alternativ oder zusätzlich zu Transformator 41 ein Trennen des dezentralen Stromnetzes 1 vom öffentlichen Verteilungsnetz 3 und zum Umschalten des dezentralen Stromnetzes 1 in den Inselbetrieb möglich.

Mittels der vorstehend beschriebenen Ausführungen des dezentralen Stromnetzes 1 kann ein Umschalten von einem netzparalellen Betrieb (grid-following) in einen Inselnetzbetrieb (grid-forming) und zurück erfolgen. Dieses Umschalten kann einschließlich einer Anpassung eines Schutzkonzeptes sowie einer Umschaltung eines Neutralleiter-Standpunktes einer Stromquelle auf einen Potentialausgleich/Schutzleiter erfolgen.

Mithilfe des dezentralen Stromnetzes 1 ist ein Zusammenschalten mehrerer lokaler DC-Stromquellen, zum Beispiel von PV-Anlagen über DC/DC-Converter, Batteriespeicher, E-Fahrzeuge sowie mobiler Stromspeicher über bidirektionale DC-Ladeeinrichtungen sowie Brennstoffzellen möglich.

Mit dem dezentralen Stromnetz 1 ist weiterhin ein Zusammenschalten mehrere lokaler AC-Stromquellen, zum Beispiel Notstromaggregate, E-Fahrzeuge und mobile Stromspeicher über bidirektionale AC-Ladeeinrichtungen sowie PV-Anlagen über Wechselrichter möglich.

## Patentansprüche

1. Dezentrales Stromnetz (1), welches über einen lokalen Anschluss (2) mit einem öffentlichen Verteilungsnetz (3) verbindbar ist, umfassend
- ein Wechselstromnetz (4), umfassend mindestens einen Leiter (L_{1WN}, L_{2WN}, L_{3WN}), einen Neutralleiter (NL_{WN}) und einen Schutzleiter (PE_{WN}),
- ein Gleichstromnetz (5), umfassend
-- einen positiven Leiter (L_{pGN}), einen negativen Leiter (L_{nGN}) und einen Schutzleiter (PE_{GN}),
-- eine Isolationsüberwachung (20, 26) und
-- eine Sternschaltung (19), welche mit dem positiven Leiter (L_{pGN}), dem negativen Leiter (L_{nGN}) und dem Schutzleiter (PE_{GN}) verbunden ist,
- eine Verbindungseinrichtung (6), welche das Wechselstromnetz (4) und das Gleichstromnetz (5) miteinander verbindet, umfassend
-- einen Wechselstrombereich (7),
-- einen Gleichstrombereich (8) und
-- mindestens einen bidirektionalen Converter (9), welcher den Wechselstrombereich (7) mit dem Gleichstrombereich (8) verbindet,
- eine Umschalt-/Trenneinrichtung (48) zum Trennen des dezentralen Stromnetzes (1) vom öffentlichen Verteilungsnetz (3) und zum Umschalten des dezentralen Stromnetzes (1) in den Inselbetrieb und
- eine Hauptpotentialausgleichseinrichtung (30), welche eine Erdungsanlage (31) aufweist und mit den Schutzleitern (PE_{WN}, PE_{GN}, PE_{WB}, PE_{LA}, PE_{ÜS}) des dezentralen Stromnetzes (1) verbunden ist.

2. Dezentrales Stromnetz (1) nach Anspruch 1 **dadurch gekennzeichnet, dass** die Sternschaltung (19) derart konfiguriert ist, dass diese
- in einer Trennkonfiguration keinen Stromfluss zwischen dem positiven und/oder negativen Leiter (L_{pGN}, L_{nGN}) und dem Schutzleiter (PE_{GN}) zulässt und
- in einer Erdkonfiguration einen Stromfluss zwischen dem positiven und/oder negativen Leiter (L_{pGN}, L_{nGN}) und dem Schutzleiter (PE_{GN}) in einer Zeitspanne zulässt die kleiner ist als 5s.

3. Dezentrales Stromnetz (1) nach Anspruch 1 oder 2, **dadurch gekennzeichnet, dass** die Sternschaltung (19) zwischen einer Trennstellung und einer Erdstellung schaltbar ausgestaltet ist.

4. Dezentrales Stromnetz (1) nach Anspruch 3, **dadurch gekennzeichnet, dass** die Sternschaltung (19) mechanisch und/oder elektronisch schaltbar ausgestaltet ist.

5. Dezentrales Stromnetz (1) nach einem der vorhergehenden Ansprüche, **dadurch gekennzeichnet, dass** die Sternschaltung (19) mindestens einen Widerstand (23) aufweist.

6. Dezentrales Stromnetz (1) nach einem der vorhergehenden Ansprüche, **dadurch gekennzeichnet, dass** die Umschalt-/Trenneinrichtung (48) einen ersten Kuppelschalter (34) zum Trennen des dezentralen Stromnetzes (1) vom öffentlichen Verteilungsnetz (3) umfasst.

7. Dezentrales Stromnetz (1) nach Anspruch 6, **gekennzeichnet durch** einen Überspannungsschutz (32), welcher zwischen dem lokalen Anschluss (2) und dem ersten Kuppelschalter (34) mit dem dezentralen Stromnetz (1) verbunden ist.

8. Dezentrales Stromnetz (1) nach einem der vorhergehenden Ansprüche, **dadurch gekennzeichnet, dass** die Umschalt-/Trenneinrichtung (48) einen zweiten Kuppelschalter (35) in der Verbindungseinrichtung (6) zum Trennen des Wechselstromnetzes (4) und des Gleichstromnetzes (5) umfasst.

9. Dezentrales Stromnetz (1) nach einem der vorhergehenden Ansprüche, **dadurch gekennzeichnet, dass** die Umschalt-/Trenneinrichtung (48) einen Transformator (41) umfasst, welcher einen ersten mit dem Wechselstromnetz (4) in Verbindung stehenden Transformatorteil (42), und einen zweiten mit der Verbindungseinrichtung (6) in Verbindung stehenden Transformatorteil (44) umfasst.

10. Dezentrales Stromnetz (1) nach Anspruch 9, **dadurch gekennzeichnet, dass** die Transformatorteile (42, 44) eine Sternpunkterdung (46) aufweisen.

11. Dezentrales Stromnetz (1) nach Anspruch 9 oder 10, **dadurch gekennzeichnet, dass** zwischen dem ersten Transformatorteil (42) und dem Wechselstromnetz (4) eine erste Trennvorrichtung (43) und zwischen dem zweiten Transformatorteil (42) und der Verbindungseinrichtung (6) eine zweite Trennvorrichtung (45) angeordnet sind.

12. Dezentrales Stromnetz (1) nach einem der vorhergehenden Ansprüche, **gekennzeichnet durch** einen Netz- und Anlagenschutz (33).

13. Dezentrales Stromnetz (1) nach Anspruch 12 und mindestens einem der Ansprüche 3, 6, 8 und 11, **dadurch gekennzeichnet, dass** der Netz-und Anlagenschutz (33) die Sternschaltung (19), den ersten Kuppelschalter (34), den zweiten Kuppelschalter (35), die erste Trennvorrichtung (43) und/oder die zweite Trennvorrichtung (45) schalten kann.

14. Dezentrales Stromnetz (1) nach einem der vorhergehenden Ansprüche, **dadurch gekennzeichnet, dass** der bidirektionale Converter (9) keine galvanische Trennung aufweist.

15. Dezentrales Stromnetz (1) nach einem der vorhergehenden Ansprüche, **gekennzeichnet durch** mindestens eine im Wechselstromnetz (4) angeordnete Differenzstromüberwachung (18, 38).
